# EUROPEAN PATENT SPECIFICATION

(11) **EP 0 713 369 B1**
(45) Date of publication and mention of the grant of the patent: **19.09.2001**
(21) Application number: 94920835.9
(22) Date of filing: 30.06.1994
(51) Int. Cl.: A44B 18/00, B29C 33/14

(54) **METHOD OF PRODUCING A HOOK OR LOOP COMPONENT**
FLÄCHENREISSVERSCHLUSSEINSATZHERSTELLUNGSVERFAHREN
PROCEDE DE PRODUIRE UN INSERT DU TYPE A CROCHET OU BOUCLE

(30) Priority: 06.07.1993 US 87917
(43) Date of publication of application: 29.05.1996
(73) Proprietor: VELCRO INDUSTRIES B.V., Curaçao (AN)
(72) Inventor: BANFIELD, Donald L., Hudson, NH 03051 (US); ROCHA, Gerald F., Bedford, NH 03120 (US); JACOBS, Martin I., Bedford, NH 03110 (US); KENNEY, Randall B., Concord, NH 03301 (US)
(74) Representative: Wallinger, Michael, Dr.-Ing.
(86) International application number: US9407473
(87) International publication number: WO9501741

(56) References cited:
- EP-A- 0 439 969
- WO-A-92/19119

## Description

This invention relates to methods of fabricating separable fasteners of the hook and loop type, for attachment to other objects such as poly(urethane) foam seat cushions or hard plastic parts for automobiles, furniture and the like. One portion of a separable fastener is incorporated into the plastic object during the molding process for subsequent attachment to another object carrying the mating portion of the separable fastener. Such fasteners provide a greater degree of design flexibility as to the shape and especially as to types of plastic into which the part may be molded. Although particular reference is made herein to elastomeric poly(urethane) foam or hard plastic parts, it is to be understood that a fastener product produced by the present methods can be used in parts made from a wide variety of materials, e.g. thermoplastic materials, thermosetting materials, elastomers, or any other moldable composition, and such compositions are referred to broadly as plastics.

Hook and loop separable fasteners, such as those sold by the assignee of this application under the trademark "VELCRO" are well known and used to join two members detachably to each other. This type fastener has two components. Each has a flexible substrate or base having one component of the fastening system on the surface thereof. One surface is typically comprised of resilient hooks while the other is comprised of loops. When the two surfaces are pressed together they interlock to form a releasable engagement.

The hooks can be of any of a variety of shapes, ranging from simple cane-shaped hooks, to palm tree-shaped hooks, to mushroom shaped hooks, all of which are well known within the art. As used within this application, the term "hook" shall be construed to cover any such configuration of loop-engaging element.

Separable fasteners have in recent years been used in the manufacture of automobile seats in the attachment of an upholstered seat cover, hereinafter called trim cover, to a poly(urethane) foam bun. One portion of the separable fastener is incorporated into the surface of the poly(urethane) seat bun during the foam molding process. The mating portion of the separable fastener is attached to the seat cover to provide. releasable attachment to the foam seat bun. The separable fastener assembly used in the foam mold for incorporation in the bun surface typically comprises the hooked portion of the separable fastener system. This hook portion is characterized by a base carrying resilient hooks on one surface. The outer surface of the base may act as an anchoring surface by a variety of methods well known in the art. In some assemblies a magnetizable shim is attached to the base to facilitate placement of the assembly in a trough of the mold cavity wall, which is equipped with magnets. A protective layer, usually in the form of a thin plastic film, is placed over the resilient hooks to prevent incursion of foam into the hooks during the molding process. Significant foam contamination of the hooks would affect their ability to engage with the mating portion of the fastener. Such fastening devices are applied to one surface of a clamshell mold; a chemical mixture, usually of a diisocyanate and a polyol, are injected into a mold; the upper surface of the mold is closed and clamped shut while the chemicals react and blow to form a flexible foam, well known in the art. The present state of the art relating to the attachment of such fastener means to foamed seat cushions and the like is generally represented by French patents FR 2,405,123 and FR 2,423,666 as well as the following U.S. patents:
US 4,470,857, issued September 11, 1984 in the name of Stephen J. Casalou and assigned to R.A. Casalou, Inc.;
US 4,563,380, issued January 7, 1986 in the name of Philip D. Black and assigned to Minnesota Mining and Manufacturing Company;
US 4,673,542, issued June 16, 1987 in the name of Lauren R. Wigner and assigned to General Motors Corporation;
US 4,693,921, issued September 15, 1987 in the name of Patrick J. Billarant and Bruno Queval and assigned to Aplix;
US 4,710,414, issued December 1, 1987 in the name of Walter E. Northup and Maurice E. Freeman and assigned to Minnesota Mining and Manufacturing Company;
US 4,726,975, issued February 23, 1988 in the name of Richard N. Hatch and assigned to Actief N.V. ABN Trust Co.; and
US 4,842,916 issued June 27, 1989 to Kunihiko Ogawa et al assigned to Kuraray Company Ltd., Kurashiki, Japan.

Such mold-in separable fastener assemblies presently in use, while proving to be superior means of attaching a seat cover to a foam bun, have limitations. One disadvantage of the separable fastener assemblies of the type disclosed in US 4,673,542 is that the thin plastic film layer used to cover the hooks is light and flimsy thus limiting the degree of protection offered to the hooks against high pressure or temperature. Such devices are therefor unable to be used for molding hooks into hard plastic using a standard injection molding machine where the high temperature of the molten plastic has a tendency to melt the hooks or the high pressure of the plastic during the injection process is capable of crushing the hooks.

Other prior-art assemblies, including those disclosed in US 4,726,975, US 4,563,380 and US 4,693,921 also employ a thin layer of film to prevent the incursion of foam into the fastener elements of the separable fastener during molding. French Patent FR 2,423,666 discloses a system for sealing the edges of the tape in the mold trough by jamming the edges of the fastener into the trough. None of these methods provides protection for the hooks against high temperature or pressure which will destroy hooks during the molding operation. US 4,562,032 incorporates a soft lining as an integral portion of the mold cavity surface to protect the grain of a thin grained face of a vinyl sheet but the patent literature is generally devoid of teachings which protect large protuberances on plastic mold inserts from the rigors of the injection or compression molding process. In fact the patent literature repeatedly recommends the melting temperature of the insert part be greater than the processing temperature of the injecting molten polymer. Such teachings are contained in US 2,643,158 directed to a method of molding brushes. At section 4, line 60-63, "In general the materials should be selected so that the strands or tufts shall not be caused to deteriorate by the molding heat". Those skilled in the art understand it is not advisable to insert plastic into injection molds or into compression molds at temperatures greater than the distortion temperature of the insert part. In some cases methods are used for cooling a portion of the mold containing a meltable insert. Such systems are cumbersome, expensive and difficult to use.

The European patent EP 0 537 333 discloses a fastener of the hook and loop type intended to be molded into a plastic article. The engaging elements may be formed by passing a fastener tape under the knife of a knife coater, thereby evenly spreading an elastomeric compound over the engaging elements. Alternatively, the elastomeric coating may be applied by calender coating. An uncoated fastener is passed between the calender rolls and an elastomeric compound is applied into the nip formed between the rolls. The compound is thereby distributed throughout the region of the engaging elements.

The object of the present invention is to provide improved methods of manufacturing such hook and loop components, which are subsequently capable of being insert molded into plastic parts using standard injection or compression molding techniques without destroying the hook projections due to intrusion of foreign material or heat and pressure. Another object of the invention is to provide methods for manufacturing hook and loop components which are more efficient and reliable in large scale production of the fastener components.

According to the present invention, two methods for producing hook and loop components are provided as defined in claims 1 and 5. Further, a method of forming a molded product having a hook or loop component integrally molded therein is provided as defined in claim 8.

The produced fastener appears as a sheet like structure. In this form, it is possible to cut out strips or segments having complex shapes from the sheet which can be placed into a mold to be molded into a plastic part. According to one embodiment of the invention, encasement of the engaging elements is total such that the surface of the encasement is completely void of protuberances In another embodiment, the encasement is not quite total, such that the top surfaces of the engaging elements are slightly exposed, as through "pinholes." Such exposure avoids formation of a vacuum seal around the engaging elements and makes it easier to remove the encasement after the fastener is molded into a part. The elastomeric encasement possess sufficient resistance to compression to protect the hooks against high pressures of the molding process and also provides insulation against transfer of heat from the molten injected plastic which could melt the hooks of the fastener.

A variety of thermoplastic materials may be used for the elastomeric encasement. Vinyl plastisol is employed in one of the present methods.

In the method of forming a molded product it is preferred to incorporate means for magnetic attraction within the elastomeric encasement for holding the fastener against the magnets incorporated into the walls of the mold as is well known in the art. Such materials as iron filings or iron oxide or carbon steel strips are suitable for such purposes. Alternatively, a steel shim may be incorporated in or affixed to the base member of the fastener or attached to the cover of the fastener.

The Methods of the invention provide a fastener which is capable of withstanding the rigors of the most severe molding processes, such as injection or compression molding, at temperatures greater than the distortion temperature of the polymer forming the insert part. A fastener manufactured by the present methods is placed in a mold and positioned with the aid of the magnets. Material from which the molded product is to be fabricated is introduced into the mold, and the product is formed by molding. After molding, the elastomeric protective encasement is removed from the fastener elements thereby exposing the hooks. The protective encasement, being elastic, is capable of being removed by several means. In its simplest form removal is achieved by simply yanking or pulling upon the sheet formed by the elastomeric compound. The elastomeric sheet is of such integrity and elasticity it can be pulled away from the hooks without distorting them or without breaking itself. Other methods of removal are possible including injecting air through a needle inserted through the elastomeric protective encasement to lift the encasement off the engaging elements through pressure built up under the encasement. In any event the exposed hooks at this point form an integral part of the plastic piece.

The companion portion of the assembly, containing on its inner surface companion fastening elements (loops for example) is affixed to the plastic part by means of the incorporated mating elements. The hook and loop closure firmly holds the two components together providing a detachable means for combining the sections of the assemblage. The fastener is also usable in molding situations such as the cold molding of urethane seat buns.

Applying a vinyl plastisol encasement to a release blanket, then nipping the hooks into the vinyl plastisol, is a method for producing sheets of the fastener component according to the invention.

It is then possible to slit the wide product sheets into long narrow strips which substitute readily for the more conventional well known strip fasteners molded into seat buns for attachment of trim covers to form a completed seat assembly. To create special shapes of fastener, desirable for more intricate designs in the seat, the wide sheet may be cut into various shapes, such as curves, chevrons, wings and the like, using methods well known such as rotary or steel rule dies.

In order to more fully understand the invention, reference is made to the following detailed drawings.

Fig. 1 is a cross sectional view of hook and loop components of a hook and loop fastener.

Fig. 1a is a cross sectional view of a back-to-back hook component of a hook and loop fastener.

Fig. 2 is a cross sectional view of the hook component of Fig. 1 with the hooks encased in a protective encasement,

Fig. 2a is a cross sectional view of the back-toback hook component of Fig. 1a with the fastening hooks encased in a protective encasement.

Fig. 3 is a cross sectional view depicting the fastener component of Fig. 2 positioned in an injection mold with the mold faces apart.

Fig. 4 is cross sectional view of the mold of Fig. 3 with the mold closed and having received molten plastic.

Fig. 5 is a cross sectional view of the mold of Figs. 3 and 4 with the mold reopened and ready to discharge a molded plastic part having the fastener component of Fig. 2 molded therein.

Fig. 6 is a cross sectional view of the molded plastic part of Fig. 5 demonstrating removal of the elastomeric encasement from the hooks of the fastener component.

Fig. 7 is a cross sectional view of the molded plastic part of Fig. 6 after the elastomeric encasement has been completely removed.

Fig. 7a is a cross sectional view of a molded plastic part, similar to that of Fig. 7, made with the back-to-back hook component of Figs. 1a and 2a.

Figs. 8 - 10 depict the same sequence as Figs. 3-5, but for a compression molding process instead of an injection molding process.

Figs. 11 - 13 depict a fastener being employed in a liquid plastic molding process wherein reactive chemicals are poured into the mold and react to form a solid foam object, e.g., foam seat buns for automobiles.

Fig. 14 depicts schematically a knife coating technique known in the art for applying the elastomeric encasement compound to the hooks of a fastener tape to produce a fastener component.

Fig. 15 depicts schematically an alternative, -calendering technique known in the art for applying the elastomeric encasement compound to the hooks of a fastener tape to produce a fastener component.

Fig. 16 is a schematic diagram showing an assembly line for producing a fastener component, as in Fig. 2, having a vinyl plastisol hook encasement.

Fig. 17 is a schematic, side elevational view of a knife over roll coater used in the assembly line of Fig. 16.

Fig. 18 is a cross sectional view showing hook elements protruding slightly through the elastomeric encasement.

Fig. 18a is a close up view of a hook protruding slightly through the encasement, as shown in Fig. Figs. 18.

Figs. 19 and 20 are schematic diagrams depicting alternative assembly lines for producing a fastener component, as in Fig. 2, having an extruded thermoplastic hook encasement.

Figs. 21-23 are cross sectional views showing various embodiments of a hook fastener, with a steel shim used for positioning the fastener within a mold.

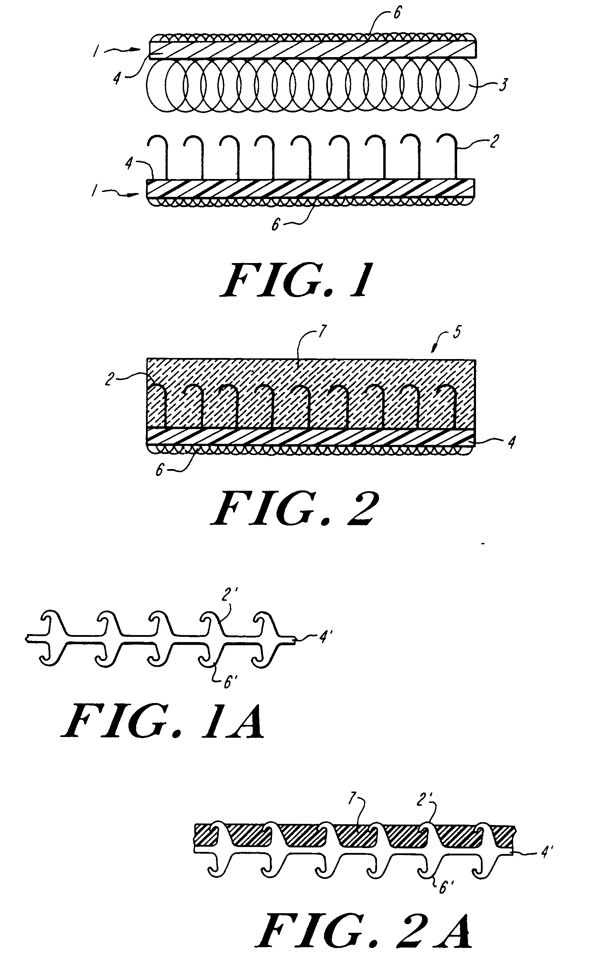

Figs. 1 and 2 illustrate fastener components which may be produced by the methods of the present invention.

Fig. 1 is a cross-sectional view of the two portions of a standard hook and loop tape 1 where the two portions are not engaged. Base 4 supports upstanding hooks 2 and loops 3. As the two portions are pressed together the hooks 2 penetrate loops 3 to releasably engage each side of the fastener. Backing 6 has been added to base 4 to serve as a tie layer for molding the fastener 1 into other objects such as plastic parts or elastomeric seat buns. Alternatively, as shown in Fig. 1a, a back-to-back hook portion has fastening hooks 2' which are used to fasten the hook portion to the loop portion; tie-down hooks 6' which are used to anchor the fastener into the molded plastic part; and base 4', all of which are integrally molded. Loops 3 and hooks 2 are customarily made from thermoplastic polymeric resins which are heat set to resiliently retain their shape during multiple openings and closings of the fastener. If the thermoplastic hooks or loops are subjected to high temperatures and/or high pressures the elements 2 or 3 will be crushed and rendered inoperable. If the temperature is raised near the softening point of the thermoplastic resin forming the fastener elements, the elements will distort or even melt if the temperature is sufficiently high. If at the same time great pressure is applied to the softened elements the entire assembly is crushed and the function of the fastener is destroyed.

A typical environment wherein such temperatures and pressures are encountered is in plastic molding such as injection molding, compression molding, casting, slush molding, powder molding, transfer molding, rotational molding and the like. Heretofore, it is not known to mold-in hook and loop fasteners directly into plastic parts using such methods because the molding process destroys the fastener elements.

Fig. 2 depicts a cross sectional view of the product wherein the above mentioned difficulties have been overcome by encasing the fastener elements 2 in an elastomeric encasement 7 which completely surrounds the elements 2. Similarly, Fig. 2a depicts a back-to-back hook portion wherein the fastening hooks 2' are encased in elastomeric encasement 7, while tie-down hooks 6' are left exposed to facilitate anchoring the hook portion into a molded plastic part. The elastomeric protection encasing the elements 2 or 2' are selected from materials which operate to encapsulate and prevent contamination or destruction of the hook or loop projections during a rigorous plastic molding operation, while at the same time affording an encasement that can be easily applied and removed from the projections without damage to their ultimate function as a separable fastener assembly.

The elastomers employed in the present methods are thermoplastic materials and vinyl plastisol.

The elastomers are selected which have an initial application viscosity that facilitates the diffusion and penetration of the elastomer resin into the tiny irregularities of a hook and loop fastener.

Still a further criterion for selecting the elastomers of the instant invention is to include those elastomers that are effective to keep molten or liquid plastic out of the fastener elements during a particular molding cycle yet do not become permanently bound to the surface of the hooks or loops such that their removal destroys the fastener assembly. In connection with this objective, elastomers are selected which are relatively unable to adhere permanently to the surface of the particular fastener elements which they are encapsulating. It will also be appreciated that various additives can be combined with a particular elastomer to minimize permanent bonding of the surface of the fastener with a particular encapsulating material. Alternatively, the surface of the particular fastener may be treated with a release agent, prior to being coated with an elastomer resin, which facilitates removal of the elastomer after the plastic molding cycle is complete. Furthermore, additives may be incorporated directly into the various materials employed to produce the fasteners themselves, which would also contribute to a reduction in the bonding between the fastener surface and the encapsulating resin.

In addition to bonding performance, it is important to consider the structural characteristics of the elastomer as well. The elastomer must be soft or pliable enough (as indicated by Shore A durometer value or flex modulus) so as to be peeled away from the fastener. At the same time, it must possess sufficient tensile strength such that it does not break when being pulled away from the fastener. When properly applied onto a hook and loop fastener 1 the elastomer encases the elements 2 (or 3) around all sides and effectively holds the element 2 in place with respect to its base 4 and adjacent hooks 2. The encapsulating elastomer 7 acts as both a seal to keep molten or liquid plastic out of the hooks 2 or loops 3 during the molding cycle, and as a compression stay to cushion the hooks from the extreme pressures associated with plastic molding cycles, and as an insulation barrier from any heat distortion or melting.

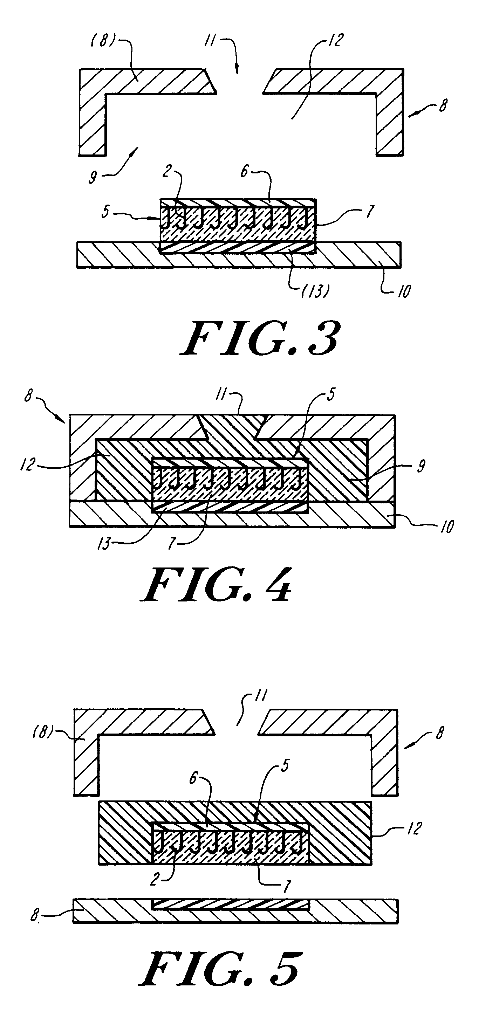

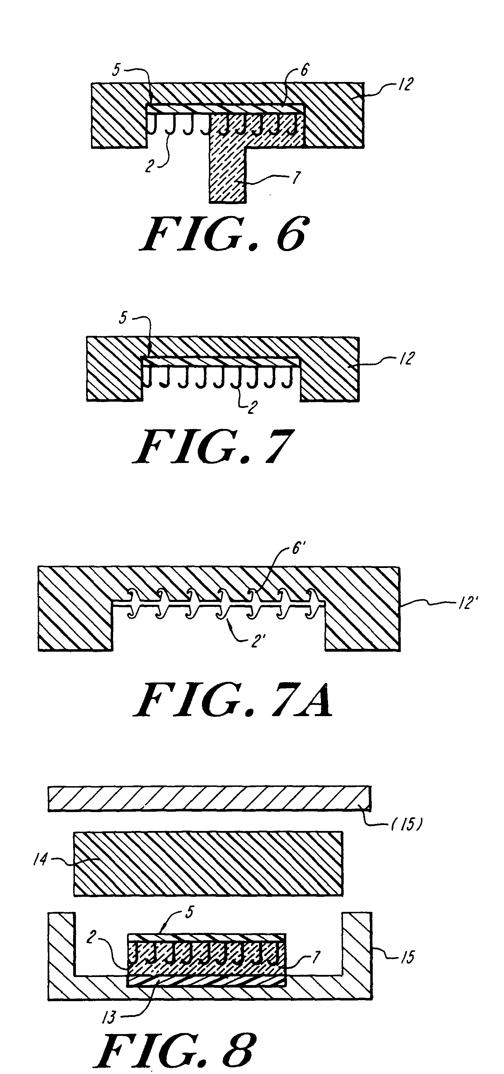

Fig. 3 is a cross section view of a simple injection mold 8 showing cavity plate 9 and core plate 10 in the open position. Fastener 5 is inserted into a section of the core plate and held thereon by a magnet 13 which is made an integral part of the mold 8. To assure attraction between the magnet 13 and the fastener 5, elastomeric encasement 7 contains, in addition to the elastomeric compound, iron particles that will be attracted to the magnet 13 and hold the fastener 5 in the desired location. Fig. 4 is a cross section representation of the mold 8 in the closed position where plastic has been injected into the cavity 9 through opening 11 to create the impression 12. Fig. 5 shows the next step in the molding process wherein the mold 8 is opened after the injected plastic has had time to solidify. At this point the part would be ejected from the mold 8. Fig. 6 depicts the step of removing the elastomeric protector 7 from the plastic part 12 to uncover fastening elements 2 or 3. Fig. 7 illustrates a cross section of the final piece 12 with hooks 2 aligned to receive loops from a companion piece (not shown) to detachably connect the assembly. Similarly, Fig. 7a illustrates a cross section of a final piece 12' made using a back-to-back hook component as shown in Figs. 1a and 2a. The fastening elements are unaffected by the severe environment within the mold cavity and are in condition to perform their fastening function when joined together with the companion loop elements.

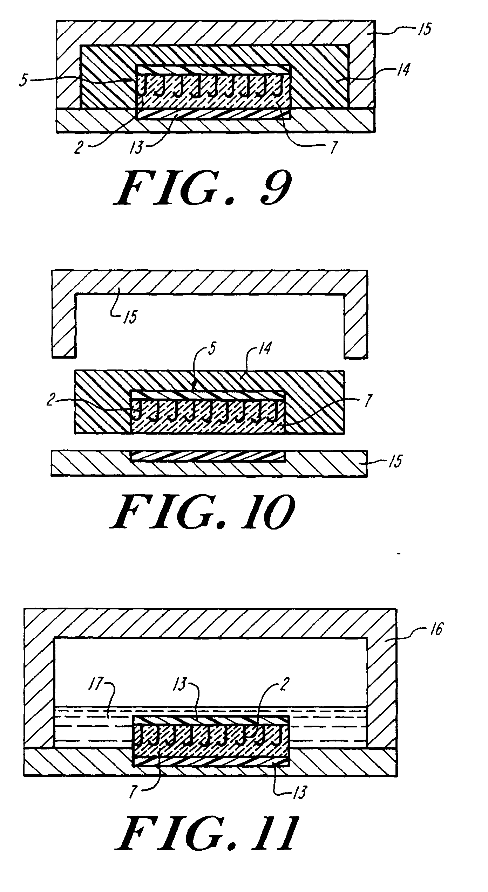

Figs. 8 - 10 depict the molding sequence involved in the compression molding process. In Fig. 8, the protected fastener 5 has been attached to the mold 15 by magnet 13. A polymer slug 14 is charged to the mold 15 and the upper portion of the mold 16 closes against the slug 14 causing it to melt and flow into the unoccupied portions of the mold cavity. Fig. 10 illustrates the next step in the compression molding process whereby the mold 15 is opened exposing the piece 12 which is subsequently removed from the mold 15. The finished piece contains the fastener 5, with the elastomeric protector 7 still in place, integrally contained as a part of the finished molded piece 12. The elastomeric protector 7 is removed as shown in Fig. 6 and the part 12 is represented, as in the case of injection molding, by Fig. 7.

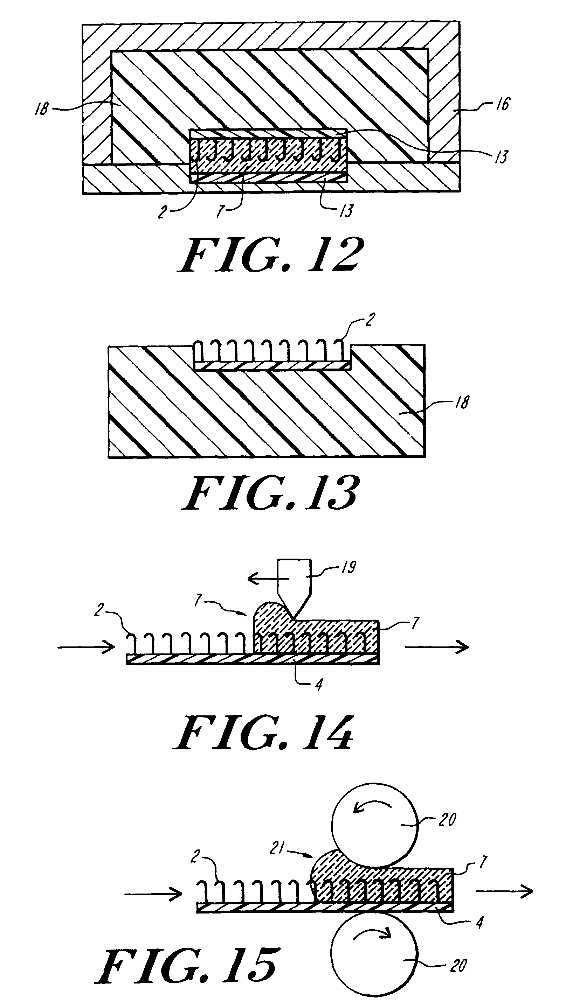

Fig. 11 illustrates a liquid molding process, such as is used for the manufacture of elastomeric seat buns for automobiles, wherein the plastic piece 18 (see Fig. 13) is formed by pouring reactive chemicals 17, such as polyol and diisocyanate, into a mold 16 and permitting the parts to react to form a solid foam object 18. Mold 16 is charged with an appropriate chemical mixture 17, well known in the art, covering a fastener element 1 possessing a protective encasement 7. The fastener is held in the mold by magnetic attraction of a magnet 13 imbedded in the mold 16 upon iron particles incorporated into the protective encasement, as described above. Fig. 12 shows the mold 16 after the chemicals 17 have reacted and filled the mold 16 to form the plastic part 18. Fig. 13 shows the finished part 18, for example a seat bun, with the fastener 1 positioned in place and integrally molded therein, after the protective encasement 7 has been removed.

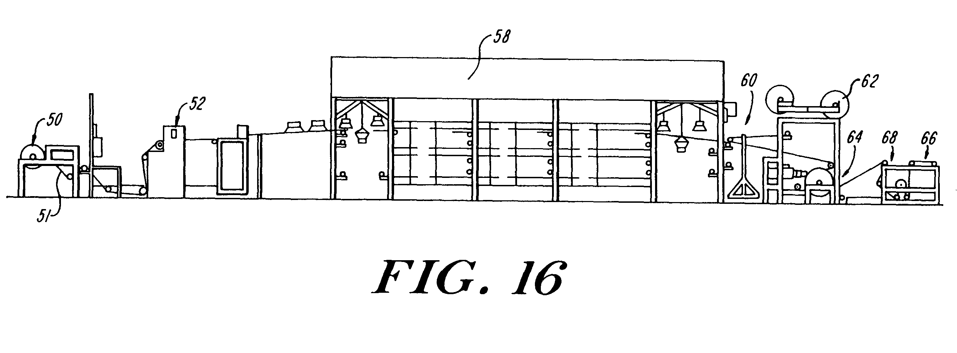

Figs. 14 and 15 illustrate known methods of applying the elastomeric coating as disclosed for example in EP-B 0 537 333.

Fig. 14 illustrates a method of applying a liquid composition to the fastener elements. The fastener tape 1 is passed under the knife of a knife coater 19, well known in the art. The elastomeric compound 5 is evenly spread over and throughout the fastener elements 2. A compound composed of Silastic E, a two part room temperature vulcanizing silicone mixture sold by the Dow Corning Company, is ideally suited for application in this manner. After applying the liquid compound it is dried in an oven at 65.6°C at (150 F) for 30 minutes. The fastener thus treated has a rubbery material completely encapsulating the fastening elements. A sheet of the encasement has a tensile strength of 4.82 MPa (700 psi) and an elongation of 400%. In general, the elastomeric encasement should have a tensile strength of at least 1.38 MPa (200 pounds per square inch), and an elongation of at least 100%.

Fig. 15 illustrates a second method of applying an elastomeric encasement to the fastener. Calender coating is well known in the art. The uncoated fastener 1 is passed between calender rolls 20. An elastomeric compound 7 is applied into the nip 21 formed between the rolls 20. The elastomeric compound is evenly distributed throughout the engaging elements 2.

Vinyl plastisol is employed in the present invention, such as that sold by Coating Systems, Inc. (CS8-1303A). An embodiment of the method of the present invention for producing a mold-in fastener component with vinyl plastisol will now be described with reference to Fig. 16. First, a fiberglass/silicone release blanket 51 is loaded onto unwind stand 50 in roll form and threaded through the processing apparatus. From unwind stand 50, release blanket 51 passes to coating station 52.

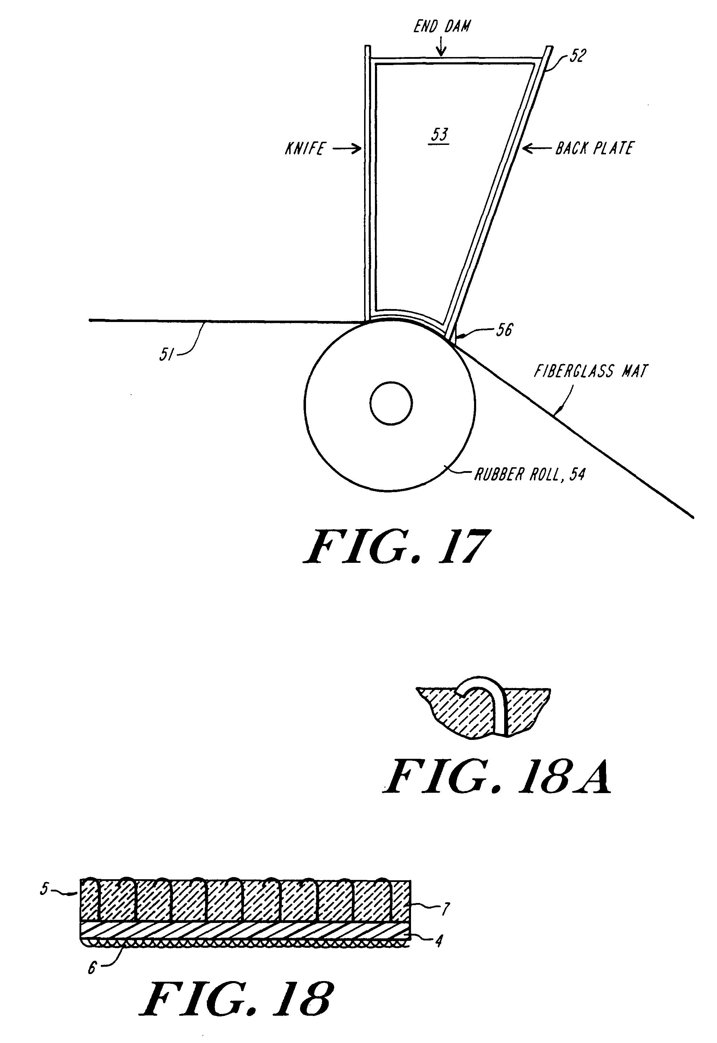

Coating station 52 is essentially a knife over rollcoater, as shown in greater detail in Fig. 17. Trough 53 is located above rubber roll 54, and release blanket 51 passes between them. As release blanket 51 passes under trough 53, vinyl plastisol at room temperature is dispensed from trough 53 onto release blanket 51. Magnetite (Fe₃O₄) -- for magnetic attraction to the mold wall magnet -- is also mixed into the plastisol. As the vinyl plastisol is applied to the release blanket 51, it is metered to a specific thickness by metering knife 56 which is attached to trough 53.

From coating station 52, release blanket 51 with the vinyl plastisol material enters heated oven zone 58. Oven zone 58 consists of a series of infrared lamps and forced hot-air convection ovens which heat the vinyl plastisol to the fusion temperature, which is approximately 191°C (375 F). Once the vinyl plastisol is fused, a series of infrared lamps activate a blowing agent contained in the vinyl plastisol material. A typical blowing agent is azodicarbonamide, available from the Uniroyal Chemical Company under the trade name Celogen AZ™. When the blowing agent reaches its activation temperature, it releases nitrogen gas which causes the vinyl plastisol to foam, a condition which is preferred. After foaming has taken place, release blanket 51 and the foamed vinyl plastisol exit oven zone 58.

From oven zone 58, vinyl plastisol-carrying release blanket 51 passes to nipping station 60 where engaging elements -- on a tape of fastener engaging elements fed from unwind station 62 -- are nipped into the vinyl plastisol while the vinyl plastisol is still soft. The engaging elements are preferably hooks. The distance from oven zone 58 to nipping station 60 is a critical process parameter. When the vinyl plastisol material on release blanket 51 exits oven zone 58, it is in the fused and blown state, but it is still a soft material. If the hooks are nipped into the vinyl plastisol material too early, the vinyl plastisol will be so soft that, once it "cures," it will bond to the hooks so firmly as to prevent easy removal of the encasement. If nipping station 60 is too far away from oven zone 58, the vinyl plastisol will have cooled and hardened to such a degree that the hooks can not be nipped into the vinyl plastisol material efficiently, i.e., they will not readily penetrate the vinyl plastisol with the proper degree of encasement.

Once the vinyl plastisol, release blanket 51, and hooks are nipped together at nipping station 60, they continue through a series of rolls while the vinyl plastisol cools. At point 64, release blanket 51 is separated from the vinyl plastisol-encased hooks and is rewound at location 66. It is crucial for the vinyl plastisol to have cooled sufficiently such that, once it is separated from release blanket 51, it does not stick to anything, especially as the vinyl plastisol-encased hooks are rewound at location 68. Cooling need not be entirely completed, however, before the encased hooks are rewound; final "curing" is in situ, i.e., with the hooks embedded, as the rolled up material continues to cool to room temperature.

When fully "cured," the vinyl plastisol must have sufficient tensile strength such that, after the fastener has been molded into a part, the vinyl plastisol does not break as it is peeled off of the hooks. This consideration must be balanced against the need to have favorable release properties. Ideally, the lowest possible pull off force would be coupled with the highest tensile strength. Softness and rigidity of the vinyl plastisol should be considered, as the softer the vinyl plastisol is, the more easily it will deform around and release the hooks. Tensile strength should be at least 1.38 MPa (200 psi). Softness as measured on the Shore A durometer scale should be less than 90, and a value less than 70 is preferred.

In its just-foamed state, the vinyl plastisol layer should be just slightly thicker than the height of the hooks, as measured from the base member to the top of the hooks. For example, where the hooks are 3.30 mm (0.13 inches) high, a foam layer 3.56 mm (0.14 inches) high is appropriate. As nipping the hooks into the vinyl plastisol is done under pressure, some of the foam is collapsed such that a small portion of the hooks, e.g., the very top surfaces, pushes its way through the vinyl plastisol layer, creating an array of "pinholes" in the top of the vinyl plastisol layer, as shown in Figs. 18 and 18a. It has been found that these "pinholes" make removal of the encasement easier, as it is believed that they prevent a suction force from forming as the hooks are pulled out of the encasement. Ease of removal and removal without breaking are important, as such qualities prevent manufacturing slowdown when a fastener is used in an assembly line environment.

Although the hooks could be protected using either foamed or solid material, using foamed vinyl plastisol has been found to be advantageous for a number of reasons, the first of which is cost. By using a foamed material, expensive solid material is "replaced" with nitrogen gas. Second, foamed material protects the hook from the pressure generated during an injection or compression plastic molding process. In effect, the foam acts as a compression stop around the hooks. When pressure from the plastic material is applied against the back of the fastener product, the foamed vinyl plastisol material will deform and flatten slightly, eventually reaching a point where it protects the hooks from being deformed or crushed by the pressure of the molding process.

The foamed material is a closed cell foam, such that nitrogen bubbles are encapsulated within the vinyl plastisol material. This further enhances the ease which the encasement is removed from the hooks as bubbles of gas -- as opposed to vinyl plastisol -- contact the surface of the plastic hooks in many places.

As noted above, the vinyl plastisol protective encasement has magnetite dispersed throughout. The magnetite will be attracted to a magnet, such as a rare earth magnet, that is bonded into a trench in the wall of a plastic-shaping mold. An appropriately cut and shaped piece of mold-in fastener product, as made according to the above described process, is placed into the mold with the elastomeric encasement facing the magnets and the mold wall. Plastic material is then introduced under pressure according to any of the plastic molding techniques described above in conjunction with Figs. 3 to 13.

As noted previously, the elastomer protects the hooks from the compressive force of the molding process. In an injection molding process, the pressure may range from 3.4 to 13.8 MPa (500 to 2000 pounds per square inch) exerted against the hook fastener, depending on the particular material being molded and the molding process itself. In compression molding -- a process wherein a preheated and softened plastic slug is forced to flow under pressure into all niches of the mold -the pressure exerted against the hook fastener may range from 6.9 to 13.8 MPa (1000 to 2000 psi).

When the plastic molding process is complete, the mold is opened and the molded plastic part is removed from the tool. At that point, the vinyl plastisol elastomeric encasement is stripped from the hooks. As noted above, the softness of the vinyl plastisol material and the fact that it has been foamed increase the ease with which it may be stripped from the hooks, as compared to the "strippability" of a harder of more rigid encasement material. Furthermore, it is important that the hooks not be permanently deformed as the vinyl plastisol encasement is removed, as that would destroy their fastening capability. The softness, flexibility, and foamed state of the vinyl plastisol further this objective as well.

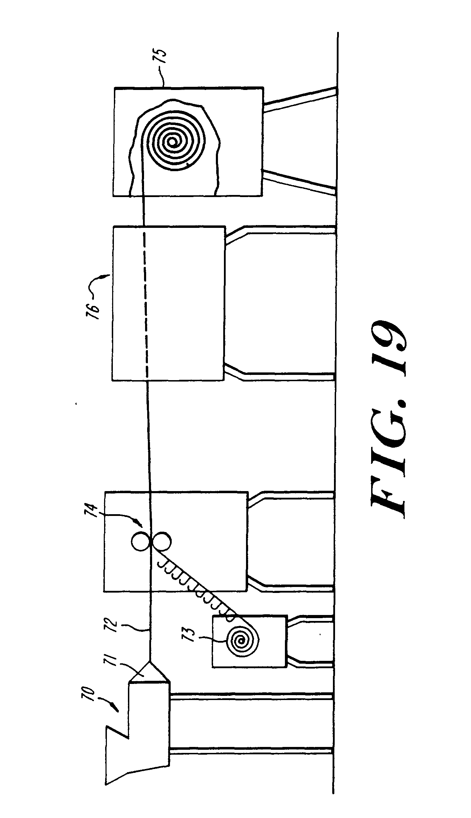

In another preferred manufacturing method of the invention a thermoplastic material is used for the encasement and is extruded onto the hooks. As shown in Fig. 19, the technique entails processing a thermoplastic material in an extruder 70, passing it through a slot-form extruder die 71 to form a molten plastic sheet 72 which is used to form the encasement for the hooks. A tape of hooks is unwound from unwind station 73 and the hooks are embedded into the still-soft thermoplastic sheet 72 by nip rolls 74. As in the method described above for providing a vinyl plastisol encasement, when the engaging elements are nipped into the thermoplastic sheetform web, the thermoplastic should be soft enough to permit efficient nipping, yet cool enough to prevent excessive bonding of the thermoplastic to the engaging elements. The composite hook/encasement structure is taken up at wind-up station 75, after having been cooled at 76 between nip rolls 74 and wind-up station 75.

Cooling can simply be by a combination of radiation and convection under ambient conditions, but preferably, in most instances, a cooling device is employed for this purpose. The composite structure is immersed or passed through a cooling trough filled with water, or passed through a plenum having cooled air or over a sequence of chilled rolls. Alternatively, cooling can be effected by cooling nip rolls 74 by flow of a cooling medium through their interiors.

The thermoplastic can consist of any of a variety of materials, selected to ensure sufficient flexibility and cohesiveness to enable stripping from the hooks without causing damage to the hooks or the base sheet to which they are attached or creating risk that the plastic strip may rupture under pull-off stress. Depending upon the size and distribution of the hooks, the thermoplastic can be a flexible PVC extrusion compound, a thermoplastic elastomer or other flexible thermoplastic compounds. The extruded thermoplastic material can be solid or foamed, depending on the particular application of the final product. As described above with respect to a vinyl plastisol encasement, a foamed encasement yields a cost advantage and can be easier to remove. An additional advantage of using a thermoplastic material is the fact that the encasement may be recycled after it has been stripped from the hooks.

For certain extruded materials and conditions, the melt strength of the extruded sheet may be so low as to cause sagging of the web if the extruder is disposed horizontally. In such cases, the thermoplastic can be extruded from a vertical extruder into an upwardly facing nip to avoid sagging of the web.

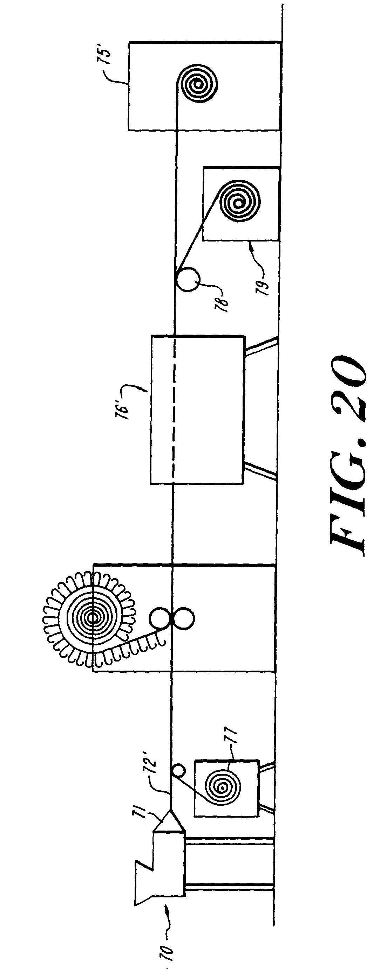

An alternate method, shown in Fig. 20, employs a release blanket 77. Extruder 70' and extruder die 71' produce thermoplastic web 72', which is carried by release blanket 77. Hooks of hook tape 73' are embedded into the upper surface of the extrudate being carried by release blanket 77, and the composite assembly enters the nip formed by rolls 74'. The composite assembly then passes through a cooling device 76', such as described above. From there, it passes to separating roll 78, at which point the release blanket is stripped from the encased hooks and each is taken up separately, take-up station 75' being provided for the encased hook tape and take up station 79 being provided for the release blanket.

As in the case of a vinyl plastisol encasement, criteria for selecting the particular thermoplastic material include high flexibility and low bond strength, so as to permit easy removal of the encasement. Other criteria include the melting or softening point of the thermoplastic material, which usually is desired to be higher than the temperature to which the encased hooks are exposed during the molding process, as well as the tensile strength of the material as noted previously.

In the methods described above, the hooks may be of molded form, including mushroom-shaped, or they may be textile monofilament cut hooks. Furthermore, as noted above, magnetizable matter, e.g. magnetite, can be incorporated into the encasement. This is particularly preferable where the hooks are part of a back-to-back configuration as shown in Figs. 1a and 2a. Substances such as iron powder, iron filings, other iron oxides such as Fe₂O₃, other iron compounds, or compounds of other elements which are magnetizable can be used.

The magnetically attractable substance is advantageously used as a meaningful colorant. For example, iron oxide is available as a pigment in several colors, such as black, red, and yellow. According to another embodiment of the invention, different colored oxides are selected for use with respectively different hook products to identify different sized or shaped fastener mold-ins. Furthermore, by choice of the magnetizable substance providing an encasement of a different color than the hooks enables one to tell quite easily, simply by looking, whether or not the encasement has been removed from the hooks.

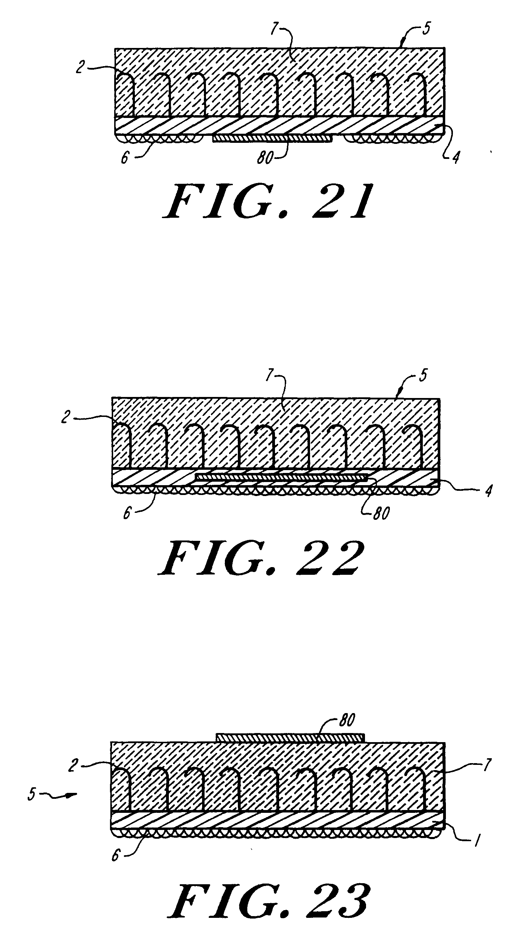

While in certain preferred embodiments the magnetizable material is dispersed in the material of the encasement, in other circumstances it is preferred to provide it using conventional techniques. A steel shim 80 may be attached to the back of the hook base member 4, as shown in Fig. 21, or embedded within the base member 4 as shown in Fig. 22. Alternatively, steel shim 80 may be attached to encasement 7, as shown in Fig. 23.

Reference has been made above to the fastener product being die-cut into various shapes. The ability to die-cut the product is obtained, for example, by extruding a wide hook web of, e.g., twelve inches width or more, and providing a correspondingly wide encasement. Complex, curved, or very wide shapes can then be die-cut from such a product.

Uses or applications for this product include attaching automotive upholstery, where a hook assembly is molded into a polyurethane foam seat cushion and then used to attach the fabric or upholstery covering to the cushion. The potential uses, however, are far broader. A fastener product obtained by the invention can be used in virtually any application where it is desired to mold hooks into a plastic or rubber part to provide means for attaching another part to the plastic part.

Furthermore, although the invention has been described in reference to protecting hooks in an elastomeric encasement, in certain applications it may be desirable to apply the encasement to protect loops. The characteristics of the material being molded, as well as the characteristics of the loops themselves should be taken into account when determining the advisability of this approach.

### EXAMPLES

The following examples will be illustrative of the execution of the present method for manufacturing and method of forming a molded product.

### EXAMPLE I

A plastic hook (Velcro® hook # CFM 24-2014) was extruded as as described in US 4,794,028 using zytel FX4209, a nylon based resin, sold by the Dupont Company. Loop 3200, a polyester knitted loop fabric sold by Guilford, was laminated on the surface opposite the hook elements. The fastener element thus formed was transfer coated using a vinyl plastisol material filled with 15% by weight Bayferrox 318M magnetite, sold by Mobay. The plastisol material also contained a heat activated blowing agent which caused the vinyl plastisol to foam when heated. The entire custom-made composition was supplied by Coating Systems, Inc. under the product number CSI 1341a.

The vinyl encasement with the fastener strip embedded therein was 3 mm (0.120") thick by 33 cm (13") wide. Samples of the coated fastener were die cut into shaped pieces, approximately 2.5 cm (1") wide, having smooth curves and various inner radii and lengths. The pieces were placed in a clamshell mold, used to make seat buns, having a pedestal with a magnet on its upper surface to hold the piece with the vinyl encasement facing downward and in intimate contact with the top surface of the pedestal.

A standard charge of liquid chemicals, including a diisocyanate and polyol, was introduced into the mold. The upper half of the mold was closed and the chemicals were allowed to react to create a foam which filled the cavity of the mold. The mold was opened and the seat bun removed.

The vinyl encasement was removed from the hooks by gripping each end of a slit cut through the vinyl in the center of each part, and pulling the encasement from the fastener. The encasement pulled away from the hooks of the fastener, without difficulty, to expose the hooks. There was no noticeable tendency to pull the fastener from the soft urethane foam and the hooking elements were free of any chemical. No damage or distortion of the hooks could be observed.

### EXAMPLE II

A plastic hook (Velcro® hook # CFM 24-2014) was extruded as in Example I using Zytel FX4209, a nylon based resin, sold by the DuPont Company. Loop 3200, a polyester knitted loop fabric sold by Guilford, was laminated on the surface opposite the hook elements. The fastener element thus formed was nipped onto an elastomeric, extruded polyvinyl chloride (PVC) material filled with 20% by weight Bayferrox 318M magnetite, sold by Mobay. The entire custom-made PVC composition was supplied by Teknor Apex under part number 93-A0090B-52. The PVC encasement with the fastener strip was 3 mm (0.120") thick by 2.5 cm (1") wide.

Samples of the coated fastener were die cut into 2.5 cm (1") wide strips of various lengths. The cut pieces were placed in a clamshell mold, used to make seat buns, having a trench with a magnet on its lower surface to hold the piece with the encasement facing downward and in intimate contact with the bottom surface of the trench.

A standard charge of liquid chemicals, including diisocyanate and a polyol, was introduced into the mold. The upper half of the mold was closed and the chemicals were allowed to react to create a foam which filled the cavity of the mold. The mold was opened and the seat bun removed.

The PVC encasement of the hooks was removed by gripping each end of the elastomer and pulling the encasement from the fastener. The encasement pulled away from the hooks of the fastener, without difficulty, to expose the hooks. There was no noticeable tendency to pull the fastener from the soft urethane foam and the hooking elements were free of any chemical. No damage or distortion of the hooks could be observed.

## Claims

1. A method of producing a hook or loop component for a hook and loop fastener which component can be integrally molded into a plastic article by a molding process, said method comprising:
a) extruding a sheet of molten thermoplastic material;
b) providing a tape (62) of engaging elements (2) and embedding said engaging elements into said thermoplastic material under conditions which enable efficient embedding of said engaging elements and which prevent excessive bonding of said thermoplastic material to said engaging elements (2); and
c) cooling said thermoplastic material to form a protective elastomeric encasement (7) of said engaging elements.

2. The method of Claim 1, wherein said embedding is accomplished by nipping said engaging elements (2) into said extruded sheet of said thermoplastic material when in a still-soft state which allows efficient nipping of said engaging elements and when said thermoplastic material is cool enough to prevent bonding of said thermoplastic material to said engaging elements to an extent which would hamper subsequent removal of said thermoplastic material from said engaging elements (2) when said thermoplastic material is in a fully cooled state.

3. The method of claim 1 or 2, further comprising causing said thermoplastic material to foam.

4. The method of claim 1, 2 or 3, further comprising providing a release blanket (51), applying said molten web of thermoplastic material to said release blanket before the step of embedding said engaging elements (2) in said thermoplastic material under conditions which enable efficient embedding, and separating said release blanket (51) from said thermoplastic material after cooling.

5. A method of producing a hook or loop component for a hook and loop fastener which component can be integrally molded into a plastic article by a molding process, said method comprising:
a) providing a release blanket (51)and metering vinyl plastisol onto said release blanket to form a preformed sheet and applying heat so as to cause said vinyl plastisol to fuse into a fused liquid mass having relatively low viscosity, the fused mass being in a state suitable for embedding engaging elements (2) therein;
b) providing a tape (62) of engaging elements (2) and embedding said engaging elements into said preformed sheet of fused vinyl plastisol under conditions which enable efficient embedding of said engaging elements and which prevent excessive bonding of said vinyl plastisol material to said engaging elements (2);
c) cooling said vinyl plastisol to form a protective elastomeric encasement (7) of said engaging elements, and separating said release blanket (51) from said cooled vinyl plastisol.

6. The method of claim 5, further comprising causing said vinyl plastisol to foam.

7. The method of claim 5 or 6, wherein said embedding is accomplished by nipping said engaging elements (2) into said preformed sheet of said vinyl plastisol when said vinyl plastisol is soft enough to allow efficient nipping of said engaging elements, and when said vinyl plastisol is cool enough to prevent bonding of said vinyl plastisol to said engaging elements to an extent which would hamper eventual removal of said vinyl plastisol from said engaging elements (2) when said vinyl plastisol is in a hardened state.

8. A method of forming a molded product having a hook or a loop component of a hook and loop fastener integrally molded therein, comprising
providing a hook or loop fastener component as obtained by the method of any one of the claims 1 to 7, the component having a base member (4), a multiplicity of stress-bearing engaging elements (2) extending from a surface of said base member (4), and a soft, strippable elastomeric encasement (7) encasing said engaging elements (2),
placing said fastener component (5) in a mold (10) with said encasement (7) facing a wall of said mold,
molding a product in said mold (10) in a manner such that said fastener component (5) becomes integrally molded into said product, and
stripping said encasement (7) from said engaging elements, after molding of said product is complete, without permanent deformation or substantial destruction of the fastening capability of said engaging elements (2).

9. The method of claim 8, wherein said fastener component (5) has a magnetically attractable substance and said mold (10) is provided with magnets (13) disposed so as to magnetically attract said substance and thereby position said fastener component (5) within said mold before molding of said product.

10. The method of claim 9, wherein magnetic attraction further holds said fastener component (5) in proper position in said mold (10)during molding of said product.

## Patentansprüche

1. Verfahren zum Erzeugen einer Haken- oder Schlingenkomponente für ein Haken-/Schlingen-Befestigungselement, wobei die Komponente in einem Stück in einem Kunststoffartikel durch einen Formungsprozeß integriert werden kann, wobei das Verfahren die Schritte aufweist:
(a) Extrudieren einer dünnen Platte aus geschmolzenem thermoplastischen Material;
(b) Bereitstellen eines Bandes (62) mit Eingriffselementen (2) und Einbetten der Eingriffselemente in das thermoplastische Material unter Bedingungen, welche ein effizientes Einbetten der Eingriffselemente ermöglichen, und welche eine übermäßige Bindung des thermoplastischen Materials an den Eingriffselementen (2) verhindert und;
(c) Kühlen des thermoplastischen Materials, um einen schützenden elastomerischen Einschluß (7) der Eingriffselemente zu erzeugen.

2. Verfahren nach Anspruch 1, wobei die Einbettung durch Eindrücken der Eingriffselemente (2) in die extrudierte dünne Platte des thermoplastischen Materials erreicht wird, wenn diese sich in einem noch weichen Zustand befindet, was ein effizientes Eindrücken der Eingriffselemente ermöglicht, und wenn das thermoplastische Material kühl genug ist, um eine Verbindung des thermoplastischen Materials mit den Eingriffselementen in einem Maße verhindert, welche die anschließende Entfernung des thermoplastischen Materials von den Eingriffselementen (2) behindert, wenn sich das thermoplastische Material in einem vollständig abgekühlten Zustand befindet.

3. Verfahren nach Anspruch 1 oder 2, welches ferner das Bewirken einer Aufschäümung des thermoplastischen Materials umfaßt.

4. Verfahren nach Anspruch 1, 2 oder 3, ferner mit den Schritten;' Bereitstellen einer Abziehabdeckung (51), Aufbringen der geschmolzenen Bahn aus thermoplastischen Material auf die Abziehabdeckung vor dem Schritt der Einbettung der Eingriffselemente (2) in das thermoplastische Material unter Bedingungen, welche ein effizientes Einbetten ermöglichen, und Trennen der Abziehabdeckung (51) von dem thermoplastischen Material nach dem Kühlen.

5. Verfahren zur Herstellung einer Haken- oder Schlingenkomponente für ein Haken/Schlingen-Befestigungselement, wobei die Komponente in einem Stück in einen Kunststoffartikel durch einen Formprozeß integriert werden kann, wobei das Verfahren die Schritte aufweist:
(a) Bereitstellen einer Abziehabdeckung (51) und Dosieren von Vinylplastisol auf die Abziehabdeckung, um eine vorgeformte dünne Platte zu erzeugen und Aufbringen von Wärme in der Weise, daß das Vinylplastisol in eine geschmolzene flüssige Masse schmilzt, welche eine relativ niedrige Viskosität aufweist, wobei sich die geschmolzene Masse in einem Zustand befindet, der für die Einbettung der Eingriffselemente (2) darin geeignet ist;
(b) Bereitstellen eines Bandes (62) mit Eingriffselementen (2) und Einbetten der Eingriffselemente in die vorgeformte dünne Platte aus geschmolzenem Vinylplastisol unter Bedingungen, welche eine effiziente Einbettung der Eingriffselement ermöglichen und welche eine übermäßige Bindung des Vinylplastisolmaterials an den Eingriffselementen (2) verhindern;
(c) Kühlen des Vinylplastisols, um einen schützenden elastomerischen Einschluß (7) der Eingriffselemente zu erzeugen, und Trennen der Abziehabdeckung (51) von dem gekühlten Vinylplastisol.

6. Verfahren nach Anspruch 5, welches ferner das Bewirken einer Aufschäumung des Vinylplastisols umfaßt.

7. Verfahren nach Anspruch 5 oder 6, wobei die Einbettung erreicht wird, indem die Eingriffselemente (2) in die vorgeformte dünne Platte aus Vinylplastisol eingedrückt werden, wenn das Vinylplastisol weich genug ist, um ein effizientes Eindrücken der Eingriffselemente zu ermöglichen, und wenn das Vinylplastisol kühl genug ist, um eine Bindung des Vinylplastisols an den Eingriffselementen in einem Ausmaß zu verhindern, welches eine eventuelle Entfernung des Vinylplastisols von den Eingriffselementen (2) behindern würde, wenn sich das Vinylplastisol in einem gehärteten Zustand befindet.

8. Verfahren zur Erzeugung eines Formproduktes mit einer Haken- oder einer Schlingenkomponente eines Haken/Schlingen-Befestigungselementes das in einem Stück darin geformt ist, mit den Schritten:
Bereitstellen einer Haken- oder Schlingenbefestigungskomponente, wie sie durch das Verfahren nach einem der Ansprüche 1 bis 7 erhalten werden, wobei die Komponente ein Basiselement (4), mehrere Zugspannung aufnehmende Eingriffselemente (2), welche sich von einer Oberfläche des Basiselementes (4) aus erstrecken, und ein weiches, abziehbares elastomerisches Einschlußelement (7) aufweist, welches die Eingriffselemente (2) einschließt,
Einlegen der Befestigungskomponente (5) in eine Form (10) wobei der Einschluß (7) einer Wand der Form gegenüberliegt,
Formen eines Produktes in der Form (10) in einer Weise, daß das Befestigungselement (5) in einem Stück in das Produkt eingeformt wird, und
Abziehen des Einschlusses (7) von den Eingriffselementen nach dem Abschluß der Formung des Produkts, ohne permanente Verformung oder wesentliche Zerstörung der Befestigungsfähigkeit der Eingriffselemente (2).

9. Verfahren nach Anspruch 8, wobei die Befestigungskomponente (5) eine magnetisch anziehbare Substanz enthält, und die Form (10) mit Magneten (13) ausgestattet ist, die so positioniert sind, daß sie die Substanz magnetisch anziehen und dadurch die Befestigungskomponente (5) innerhalb der Form vor der Formung des Produkts positionieren.

10. Verfahren nach Anspruch 1, wobei die magnetische Anziehung ferner das Befestigungselement (5) in einer geeigneten Position in Form (10) während der Formung des Produktes hält.

## Revendications

1. Procédé de production d'un composant à crochets ou bouclettes pour une attache à crochets et bouclettes, lequel composant peut être moulé d'un seul tenant en un article de matière plastique par un procédé de moulage, ledit procédé comprenant :
a) l'extrusion d'une feuille de matériau' thermoplastique fondu ;
b) la fourniture d'un ruban (62) d'éléments de venue en prise (2) et l'inclusion desdits éléments de venue en prise dans ledit matériau thermoplastique dans des conditions qui permettent une inclusion suffisante desdits éléments de venue en prise et qui empêchent une liaison excessive dudit matériau thermoplastique auxdits éléments de venue en prise (2) ; et
c) le refroidissement dudit matériau thermoplastique pour former un encastrement élastomère protecteur (7) desdits éléments de venue en prise.

2. Procédé selon la revendication 1, dans lequel ladite inclusion est accomplie en pinçant lesdits éléments de venue en prise (2) dans ladite feuille extrudée dudit matériau thermoplastique tandis qu'elle est encore à l'état mou, ce qui permet de pincer efficacement lesdits éléments de venue en prise et, lorsque ledit matériau thermoplastique est suffisamment refroidi, d'empêcher la liaison entre ledit matériau thermoplastique et lesdits éléments de venue en prise jusqu'à un degré tel qu'il gênerait l'enlèvement ultérieur dudit matériau thermoplastique desdits éléments de venue en prise (2) lorsque ledit matériau thermoplastique est à l'état totalement refroidi.

3. Procédé selon la revendication 1 ou 2, comprenant en outre la conversion dudit matériau thermoplastique en une mousse.

4. Procédé selon la revendication 1, 2 ou 3, comprenant en outre la fourniture d'une couverture anti-adhérente (51), l'application de ladite nappe fondue de matériau thermoplastique sur ladite couverture anti-adhérente avant l'inclusion desdits éléments de venue en prise (2) dans ledit matériau thermoplastique dans des conditions qui permettent une inclusion efficace, et la séparation de ladite couverture anti-adhérente (51) dudit matériau thermoplastique après refroidissement.

5. Procédé de production d'un composant à crochets ou bouclettes pour une attache à crochets et bouclettes, lequel composant peut être moulé d'un seul tenant en un article de matière plastique par un procédé de moulage, ledit procédé comprenant :
a) la fourniture d'une couverture anti-adhérente (51) et la distribution dosée de vinyl-plastisol sur ladite couverture anti-adhérente pour former une feuille préformée, et l'application de chaleur de façon à faire fondre ledit vinyl-plastisol en une masse liquide fondue ayant une viscosité relativement basse, la masse fondue étant dans un état convenant à l'inclusion, dans celle-ci, d'éléments de venue en prise (2) ;
b) la fourniture d'un ruban (62) d'éléments de venue en prise (2) et l'inclusion desdits éléments de venue en prise dans ladite feuille préformée de vinyl-plastisol fondu dans des conditions qui permettent une inclusion efficace desdits éléments de venue en prise et qui empêchent une liaison excessive dudit matériau vinyl-plastisol avec lesdits éléments de venue en prise (2) ;
c) le refroidissement dudit vinyl-plastisol pour former un encastrement élastomère protecteur (7) desdits éléments de venue en prise, et la séparation de ladite couverture anti-adhérente (51) dudit vinyl-plastisol refroidi.

6. Procédé selon la revendication 5, comprenant en outre la conversion dudit vinyl-plastisol en une mousse.

7. Procédé selon la revendication 5 ou 6, dans lequel ladite inclusion est accomplie en pinçant lesdits éléments de venue en prise (2) dans ladite feuille préformée dudit vinyl-plastisol lorsque ledit vinyl-plastisol est suffisamment mou pour permettre un pinçage efficace desdits éléments de venue en prise, et lorsque ledit vinyl-plastisol est suffisamment froid pour empêcher la liaison dudit vinyl-plastisol avec lesdits éléments de venue en prise à un degré qui empêcherait l'élimination éventuelle dudit vinyl-plastisol desdits éléments de venue en prise (2) lorsque ledit vinyl-plastisol est à l'état durci.

8. Procédé de formation d'un produit moulé ayant un composant à crochets ou bouclettes d'une attache à crochets et bouclettes moulé d'un seul tenant avec lui, comprenant
la fourniture d'un composant d'attache à crochets ou bouclettes tel qu'obtenu par le procédé selon l'une quelconque des revendications 1 à 7, le composant ayant un élément de base (4), une multiplicité d'éléments de venue en prise (2) supportant les efforts et s'étendant à partir d'une surface dudit élément de base (4), et un encastrement élastomère (7) détachable, souple, incluant lesdits éléments de venue en prise (2),
le positionnement dudit composant d'attache (5) dans un moule (10) avec ledit encastrement (7) tourné vers une paroi dudit moule,
le moulage d'un produit dans ledit moule (10) d'une manière telle que ledit composant d'attache (5) devienne moulé d'un seul tenant dans ledit produit, et
le détachement dudit encastrement (7) desdits éléments de venue en prise, après que le moulage dudit produit soit terminé, sans déformation permanente ou destruction substantielle de la capacité d'attache desdits éléments de venue en prise (2).

9. Procédé selon la revendication 8, dans lequel ledit composant d'attache (5) comporte une substance pouvant être attirée magnétiquement et ledit moule (10) est pourvu d'aimants (13) disposés de façon à attirer magnétiquement ladite substance et ainsi à positionner ledit composant d'attache (5) au sein dudit moule avant le moulage dudit produit.

10. Procédé selon la revendication 9, dans lequel la traction magnétique maintient en outre ledit composant d'attache (5) en position convenable dans ledit moule (10) pendant le moulage dudit produit.
